# EUROPÄISCHE PATENTSCHRIFT

(11) **EP 1 295 762 B1**
(45) Veröffentlichungstag und Bekanntmachung des Hinweises auf die Patenterteilung: **12.01.2005**
(21) Anmeldenummer: 02019655.6
(22) Anmeldetag: 03.09.2002
(51) Int. Cl.: B60R 21/34, B62D 25/12, E05D 3/06

(54) **Anordnung einer Frontklappe an einem Fahrzeug**
Arrangement of a bonnet on a vehicle
Arrangement d'un capot de véhicule

(30) Priorität: 12.09.2001 DE 10144812
(43) Veröffentlichungstag der Anmeldung: 26.03.2003
(73) Patentinhaber: Bayerische Motoren Werke Aktiengesellschaft, 80809 München (DE)
(72) Erfinder: Koestler, Ulrich, 85241 Hebertshausen (DE); Hiergeist, Christian, 94333 Geiselhöring (DE); Korkusuz, Haci, 81671 München (DE)

(56) Entgegenhaltungen:
- EP-A- 1 104 727
- WO-A-00/69705
- DE-A- 10 035 105
- DE-A- 19 712 961
- PATENT ABSTRACTS OF JAPAN vol. 2000, no. 02, 29. Februar 2000 (2000-02-29) -& JP 11 310158 A (HONDA MOTOR CO LTD), 9. November 1999 (1999-11-09)

## Beschreibung

Die Erfindung betrifft eine Anordnung einer Frontklappe an einem Fahrzeug, mit einer - in Fahrtrichtung betrachtet - hinten liegenden Scharniereinrichtung, um die die Frontklappe zum normalen Öffnen verschwenkbar ist, gemäß des Oberbegriffs des Patentanspruchs 1.

Aus der gattungsgemäßen DE 197 12 961 A1 ist eine Anordnung einer Frontklappe an einem Fahrzeug bekannt, die zum normalen Öffnen über eine - in Fahrtrichtung betrachtet - hinten liegende Scharniereinrichtung verschwenkbar ist. Im Fall einer Kollision mit einem Fußgänger ist die Scharniereinrichtung verlagerbar und hebt hierbei die Frontklappe in ihrem hinteren Bereich an. Dazu weist die Scharniereinrichtung einen Scharnierträger auf, der über ein Gelenk schwenkbar an der Karosserie des Fahrzeugs angeordnet ist.

Der Erfindung liegt die Aufgabe zugrunde, die bekannte Anordnung einer Frontklappe mit einer hinten liegenden Scharniereinrichtung weiterzubilden.

Diese Aufgabe wird durch die Merkmale des Patentanspruchs 1 gelöst.

Erfindungsgemäß weist die Scharniereinrichtung ein Viergelenk mit einem kurzen und einem langen Lenker auf. Kerngedanke der Erfindung ist es, dass ein karosserieseitiges Gelenk des langen Lenkers an einer energiespeichernden Einrichtung angelenkt ist. Am langen Lenker ist zwischen dem karosserieseitigen und frontklappenseitigen Gelenk ein Ende eines Verbindungslenkers angelenkt, der mit seinem mittleren Bereich an der Karosserie und dessen anderes Ende mit einem Zwischenlenker gelenkig verbunden ist. Der Zwischenlenker wiederum ist mit seinem anderen Ende an einem Koppellenker angelenkt, der mit seinem anderen Ende am karosserieseitigen Gelenk des kurzen Lenkers angelenkt ist, wobei der Koppellenker im mittleren Bereich an der Karosserie angelenkt ist.

Wenn die energiespeichernde Einrichtung ausgelöst wird, verlagert sich der karosserieseitige Anlenkpunkt des langen Lenkers nach oben. Der Verbindungslenker verschwenkt dadurch um seinen Anlenkpunkt an die Karosserie. Dies führt zu einer Verlagerung des Zwischenlenkers nach unten und damit zu einer Verschwenkung des Koppellenkers um seinen karosseriefesten Anlenkpunkt. Dadurch wird der karosserieseitige Anlenkpunkt des kurzen Lenkers ebenfalls nach oben verlagert, bzw. der kurze Lenker verlängert sich quasi um einen Teil des Koppellenkers. Die Verlagerung der karosserieseitigen Anlenkpunkte des kurzen und des langen Lenkers führt zu einer Anhebung der Frontklappe im hinteren Bereich. Durch das Anheben der Frontklappe entsteht zwischen der festen Karosserie und der beweglichen Klappe ein Abstand. Es steht dadurch genügend Raum unter der Frontklappe zur Verfügung, um die Deformationsenergie in der Frontklappe bei einem Aufprall eines Fußgängers aufzunehmen.

Die karosserieseitigen Anlenkpunkte des Verbindungs- und des Koppellenkers befinden sich günstigerweise auf einem Grundträger, der an der Karosserie angebracht ist. Dadurch kann der komplette Scharniermechanismus als vormontiertes Modul an der Karosserie angebracht werden. Die Montagezeit direkt an der Karosserie verkürzt sich so. Toleranzen der Karosserie und / oder der Frontklappe lassen sich durch den Grundträger gut ausgleichen, der zur Befestigung an der eigentlichen Karosserie beispielsweise ein Langloch aufweist.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig.** 1: eine Seitenansicht einer erfindungsgemäßen Anordnung einer Frontklappe mit einem Schamiermechanismus in der geschlossenen Stellung und
- **Fig.** 2: eine Seitenansicht der Anordnung einer Frontklappe von **Fig.** 1 in der Stellung mit aktiviertem Fußgängeraufprallschutz.

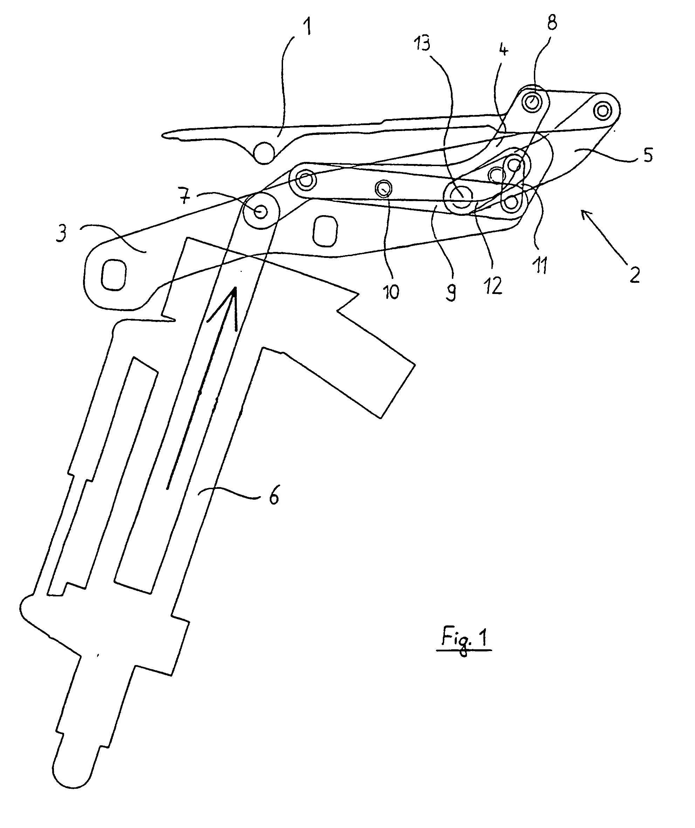

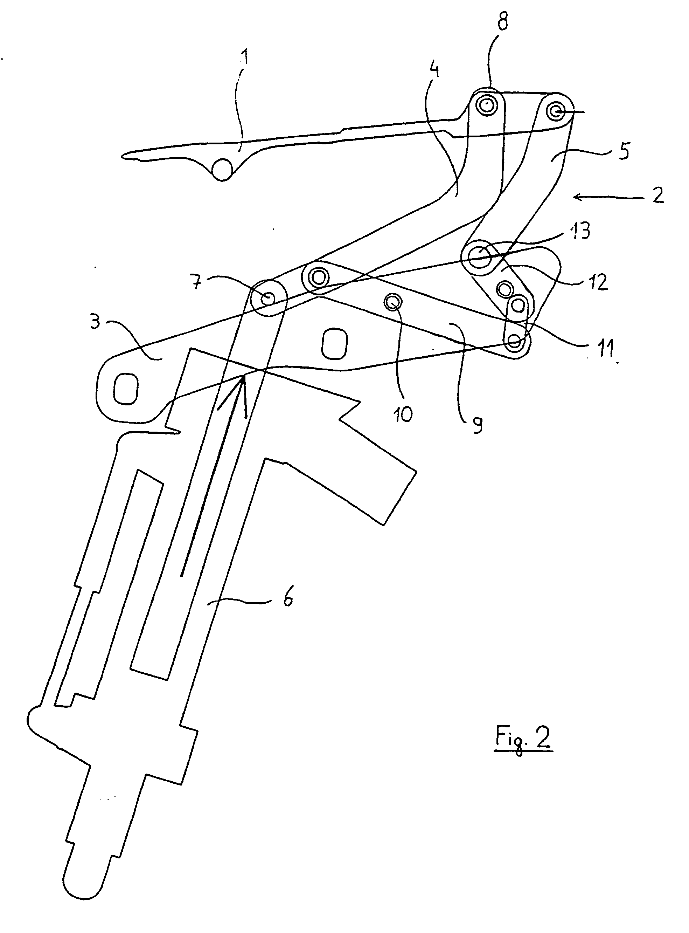

In den beiden Figuren **Fig.** 1 und **Fig.** 2 ist jeweils die Anbindung einer Frontklappe 1 gezeigt, die über einen - in Fahrtrichtung betrachtet - hinten liegenden Scharniermechanismus 2 an einem karosseriefesten Grundträger 3 angelenkt ist. Im hinteren Bereich der Frontklappe 1 ist ein vorderer langer Lenker 4 und ein hinterer kurzer Lenker 5 angelenkt. Am karosserieseitigen Endabschnitt des langen Lenkers 4 ist eine energiespeichernde Einrichtung 6 angelenkt. Zwischen dem karosserieseitigen Gelenk 7 und dem frontklappenseitigen Gelenk 8 des langen Lenkers 4 ist ein erster Endabschnitt eines Verbindungslenkers 9 angelenkt. Der Verbindungslenker 9 kann sich um ein Gelenk 10 drehen, mit dem der mittlere Bereich des Verbindungslenkers 9 gelenkig mit dem mittleren Bereich des Grundträgers 3 verbunden ist. Am zweiten Endabschnitt des Verbindungslenkers 9 ist ein Zwischenlenker 11 angelenkt, an dessen anderen Ende wiederum ein Koppellenker 12 gelenkig angebracht ist. Der Koppellenker 12 ist im mittleren Bereich drehbar am hinteren Ende des Grundträgers 3 angelenkt. Mit seinem dem Zwischenlenker 11 gegenüberliegenden Endabschnitt ist der Koppellenker 12 mit dem karosserieseitigen Gelenk 13 des kurzen Lenkers 5 gelenkig verbunden.

In der in **Fig.** 1 gezeigten geschlossenen Stellung der Frontklappe 1 mit nicht aktiviertem Fußgängeraufprallschutz weist die energiespeichernde Einrichtung 6 eine feste Länge auf. Aufgrund der unveränderbaren Länge des langen Lenkers 4 zwischen dem karosserieseitigen Gelenk 7 an der energiespeichernden Einrichtung 6 und der Anlenkung des Verbindungslenkers 9 und der unveränderbaren Länge des Verbindungslenkers 9 zwischen der Anlenkung am langen Lenker 4 und dem Gelenk 10 mit dem Grundträger 3 ist somit die Lage des langen Lenkers 4 und des Verbindungslenkers 7 nicht veränderbar. Damit sind auch der Zwischenlenker 11 und der Koppellenker 12 in ihrer Position nicht veränderbar. Der Koppellenker 12 befindet sich dabei in einer Stellung, die nicht vertikal, sondern schräg ist. Nur der kurze Lenker 5 kann seine Lage verändern. Damit ist die Funktionalität des Scharniermechanismus 2 auf die eines einfachen Viergelenkscharniers reduziert. Die Frontklappe 1 kann konventionell geöffnet und geschlossen werden. Eine Hinterkante der Frontklappe 1, die sich in der geschlossenen Stellung der Frontklappe 1 etwas hinter dem Scharniermechanismus 2 befindet, taucht beim Öffnen der Frontklappe 1 aufgrund des Viergelenkmechanismus nicht unerwünschterweise in den darunter liegenden Bereich ein.

Wenn ein Aufprall eines Fußgängers detektiert wird, wird die energiespeichernde Einrichtung 6 ausgelöst. Diese verlängert sich dann schlagartig teleskopisch, wie es in **Fig.** 2 gezeigt ist. Dazu kann die energiespeichernde Einrichtung 6 beispielsweise eine vorgespannte Druckfeder oder eine Gasdruckfeder enthalten, in deren einer Luftkammer wie bei einem Airbag eine kleine pyrotechnische Patrone zum Auslösen gezündet wird. Die Ausführungen der energiespeichernden Einrichtungen 6 mit Federn sind leicht reversibel, die pyrotechnische Ausführung dagegen ist irreversibel. Durch die Verlängerung der energiespeichernden Einrichtung 6 wird das karosserieseitige Gelenk des langen Lenkers 4 angehoben. Der Verbindungslenker 9 dreht sich dadurch um sein Gelenk 10 mit dem Grundträger 3 im Uhrzeigersinn und zieht den Zwischenlenker 11 nach unten. Dies wiederum führt zu einer Verschwenkung des Koppellenkers 12 um sein Gelenk mit dem Grundträger 3. Dabei verlagert sich das karosserieseitige Gelenk 13 des kurzen Lenkers 5 nach oben. Der kurze Lenker 5 wird quasi durch einen Teil des Koppellenkers 12 verlängert. Dadurch wird der hintere Bereich der Frontklappe 1 angehoben, während die Frontklappe 1 an ihrer Vorderkante immer noch beispielsweise mit einem Fallenschloss verriegelt sein kann.

Durch das Anheben der Frontklappe 1 entsteht zwischen der festen Karosserie und der beweglichen Klappe ein Abstand. Es steht dadurch genügend Raum unter der Frontklappe 1 zur Verfügung, um die Deformationsenergie in der Frontklappe 1 bei einem Aufprall eines Fußgängers aufzunehmen. Beispielsweise kann der Kopf des Fußgängers so weich abgefangen werden, dass das Risiko größerer Verletzungen gering ist.

## Patentansprüche

1. Anordnung einer Frontklappe an einem Fahrzeug, mit zumindest einer - in Fahrtrichtung betrachtet - hinten liegenden Scharniereinrichtung, um die die Frontklappe zum normalen Öffnen und Schließen verschwenkbar ist, und die bei einer Kollision des Fahrzeugs mit einem Fußgänger die Frontklappe im hinteren Bereich mittels einer energiespeichernden Einrichtung anhebt, wobei die Scharniereinrichtung ein Viergelenk mit einem kurzen und einem langen Lenker aufweist, **dadurch gekennzeichnet, dass** ein karosserieseitiges Gelenk **(7)** des langen Lenkers **(4)** an der energiespeichemden Einrichtung **(6)** angelenkt ist, und am langen Lenker **(4)** zwischen dem karosserieseitigen und frontklappenseitigen Gelenk **(7** und **8)** ein Ende eines Verbindungslenker **(9)** angelenkt ist, der mit seinem mittleren Bereich an der Karosserie und dessen anderes Ende mit einem Zwischenlenker **(11)** gelenkig verbunden ist, der wiederum mit seinem anderen Ende an einem Koppellenker **(12)** angelenkt ist, der mit seinem anderen Ende am karosserieseitigen Gelenk **(13)** des kurzen Lenkers **(5)** angelenkt ist, wobei der Koppellenker **(12)** im mittleren Bereich an der Karosserie angelenkt ist.

2. Anordnung nach Anspruch 1, **dadurch gekennzeichnet, dass** sich die karosserieseitigen Anlenkpunkte des Verbindungslenkers **(9)** und des Koppellenkers **(12)** auf einem Grundträger **(3)** befinden, der an der Karosserie angebracht ist.

3. Anordnung nach einem der vorhergehenden Ansprüche, **dadurch gekennzeichnet, dass** die energiespeichernde Einrichtung **(6)** eine mechanische Feder und / oder eine Gasfeder aufweist.

4. Anordnung nach einem der Ansprüche 1 bis 2, **dadurch gekennzeichnet, dass** die energiespeichernde Einrichtung **(6)** eine pyrotechnische Einrichtung ist.

## Claims

1. An arrangement of a front flap on a vehicle comprising at least one hinge device disposed to the rear in the direction of travel in order to pivot the front flap during normal opening and closing, the arrangement raising the rear region of the front flap via an energy accumulator in the event of a collision between the vehicle and a pedestrian, wherein the hinge device comprises a four-bar linkage with a short bar and a long bar, **characterised in that** a link (7) of the long bar (4) to the body is connected to the energy accumulator (6) and an end of a connecting bar (9) is linked to the long bar (4) between the link (7) to the body and the link (8) to the front flap and its middle region is pivotably connected to the body and its other end is connected to an intermediate bar (11), the other end of which is connected to a coupling bar (12) which at its other end is connected to the link (13) between the short bar (5) and the body, wherein the middle region of the coupling bar (12) is connected to the body.

2. An arrangement according to claim 1, **characterised in that** the parts of the connecting bar (9) and of the coupling bar (12) linked to the body are situated on a main bearer (3) mounted on the body.

3. An arrangement according to any of the preceding claims, **characterised in that** the energy accumulator (6) comprises a mechanical spring and/or a pneumatic spring.

4. An arrangement according to claim 1 or claim 2, **characterised in that** the energy accumulator (6) is a pyrotechnic device.

## Revendications

1. Agencement d'un capot de véhicule avec au moins un dispositif à jointure se trouvant à l'arrière (si l'on regarde dans la direction de conduite) autour duquel le capot peut pivoter en position d'ouverture et de fermeture normale et qui soulève le capot dans la zone arrière à l'aide d'un dispositif accumulant de l'énergie dans le cas d'une collision du véhicule avec un piéton, le dispositif à jointure comportant un quadrilatère articulé doté d'un bras oscillant transversal court et d'un bras oscillant transversal long,
**caractérisé en ce qu'**
une articulation (7) côté carrosserie du bras oscillant transversal long (4) est articulée sur le dispositif accumulant de l'énergie (6) et une extrémité d'un bras oscillant transversal de raccordement (9) est articulée sur le bras oscillant transversal long (4) entre l'articulation côté carrosserie et l'articulation côté capot (7 et 8), la zone centrale de ce bras oscillant transversal de raccordement étant reliée de manière articulée à la carrosserie et l'autre extrémité l'étant à un bras oscillant transversal intermédiaire (11) qui est à son tour relié par son autre extrémité au bras oscillant transversal de couplage (12) qui est articulé par son autre extrémité sur l'articulation côté carrosserie (13) du bras oscillant transversal court (5), le bras oscillant transversal de couplage (12) étant articulé dans la zone centrale sur la carrosserie.

2. Agencement selon la revendication 1,
**caractérisé en ce que**
les points d'articulation côté carrosserie du bras oscillant transversal de raccordement (9) et du bras oscillant transversal de couplage (12) se trouvent sur un support de base (3) appliqué sur la carrosserie.

3. Agencement selon l'une quelconque des revendications précédentes,
**caractérisé en ce que**
le dispositif accumulant de l'énergie (6) comporte un ressort mécanique et/ou un ressort pneumatique.

4. Agencement selon l'une quelconque des revendications 1 à 2,
**caractérisé en ce que**
le dispositif accumulant de l'énergie (6) est un dispositif pyrotechnique.
